# EUROPEAN PATENT SPECIFICATION

(11) **EP 1 515 484 B1**
(45) Date of publication and mention of the grant of the patent: **11.04.2007**
(21) Application number: 04017786.7
(22) Date of filing: 27.07.2004
(51) Int. Cl.: H04L 12/28, H04L 12/56, H04L 29/06

(54) **Method and system for optimal load balancing in a hybrid wired/wireless network**
System und Verfahren zum optimalen Lastausgleich in einem hybriden drahtgebundenen/drahtlosen Netzwerk
Procédé et système d'équilibrage de charges optimal dans un réseau cablé/sans fil hybride

(30) Priority: 09.09.2003 US 658734
(43) Date of publication of application: 16.03.2005
(73) Proprietor: Broadcom Corporation, Irvine, CA 92618-7013 (US)
(72) Inventor: Frank, Edward H., Atherton CA 94027 (US); Martin, Richard, Morgan Hill CA 95037 (US)
(74) Representative: Jehle, Volker Armin

(56) References cited:
- EP-A- 1 156 623
- WO-A-03/039054
- FR-A- 2 834 606
- US-A1- 2002 071 419
- US-A1- 2003 133 420
- US-A1- 2003 139 197

## Description

### CROSS-REFERENCE TO RELATED APPLICATIONS/INCORPORATION BY REFERENCE

This application makes reference to, claims priority to and claims the benefit of: United States Patent Application US 2004-0053624A1 entitled "Method and System for Optimal Load Balancing in a Hybrid Wired/Wireless Network", Publication Date March 18, 2004;
United States Provisional Patent Application Serial No. 60/411,261 entitled "Communications Systems Software and Protocols" filed on September 17, 2002;
United States Provisional Patent Application Serial No. 60/411,301 entitled "Method and System for Providing a Scalable Integrated Switch and Wireless Architecture" filed on September 17, 2002; and
United States Provisional Application Serial No. 60/435,984 entitled "Communication System and Method in a Wireless Local Area Network" filed on December 20, 2002.

### FIELD OF THE INVENTION

Embodiments of the present application relate generally to local area networks, and more particularly to a system and method for optimal load balancing a hybrid wired/wireless local area network (WLAN).

### BACKGROUND OF THE INVENTION

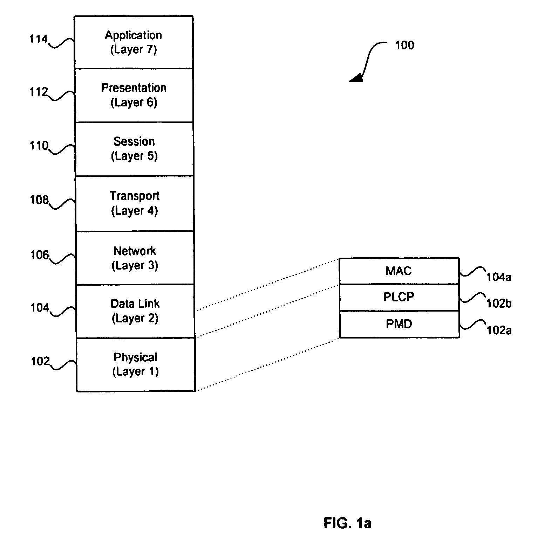

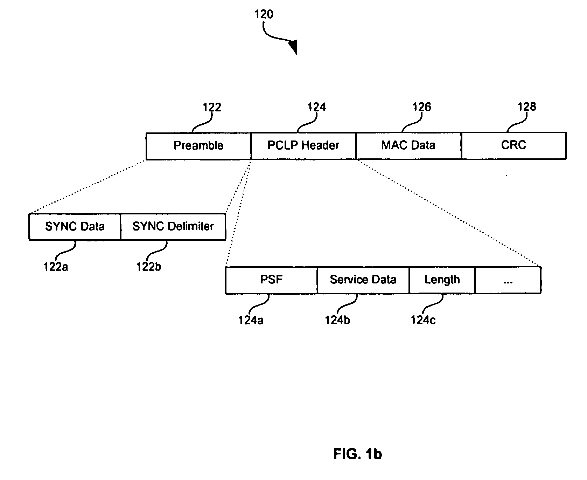

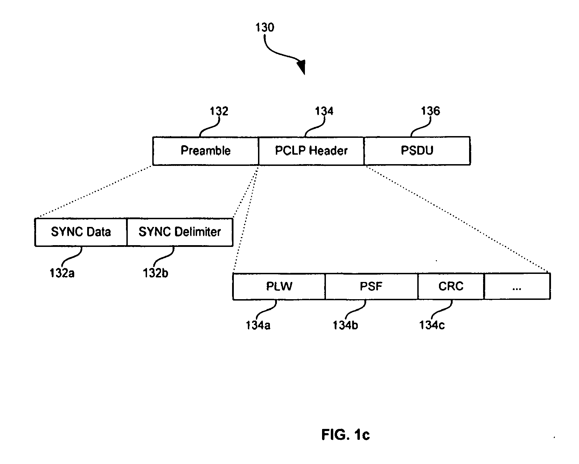

The Open Systems Interconnection (OSI) model promulgated by the International standards organization (ISO) was developed to establish standardization for linking heterogeneous computer and communication systems. The OSI model describes the flow of information from a software application of a first computer system to a software application of a second computer system through a network medium. FIG. 1a is a block diagram 100 of the OSI model. Referring to FIG. 1a, the OSI model has seven distinct functional layers including layer 7, an application layer 114; layer 6, a presentation layer 112; layer 5, a session layer 110; layer 4, a transport layer 108, layer 3, a network layer 106; layer 2: a data link layer 104; and layer 1, a physical layer 102. The physical layer 102 may further include a physical layer convergence procedure (PLCP) sublayer 102b and a physical media dependent sublayer 102a. The data link layer 104 may also include a Medium access control (MAC) layer 104a.

In general, each OSI layer describes certain tasks which are necessary for facilitating the transfer of information through interfacing layers and ultimately through the network. Notwithstanding, the OSI model does not describe any particular implementation of the various layers. OSI layers 1 to 4 generally handle network control and data transmission and reception, generally referred to as end-to-end network services. Layers 5 to 7 handle application issues, generally referred to as application services. Specific functions of each layer may vary depending on factors such as protocol and/or interface requirements or specifications that are necessary for implementation of a particular layer. For example, the Ethernet protocol may provide collision detection and carrier sensing in the physical layer. Layer 1, the physical layer 102, is responsible for handling all electrical, optical, opto-electrical and mechanical requirements for interfacing to the communication media. Notably, the physical layer 102 may facilitate the transfer of electrical signals representing an information bitstream. The physical layer 102 may also provide services such as, encoding, decoding, synchronization, clock data recovery, and transmission and reception of bit streams.

The PLCP layer 102b may be configured to adapt and map services provided by the physical layer 102 to the functions provided by the device specific PMD sublayer 102a. Specifically, the PLCP layer 102b may be adapted to map PHY sublayer service data units (PDSUs) into a suitable packet and/or framing format necessary for providing communication services between two or more entities communicating via the physical medium. The PMD layer 102a specifies the actual methodology and/or protocols which may be used for receiving and transmitting via the physical medium. The MAC sublayer 104a may be adapted to provide, for example, any necessary drivers which may be utilized to access the functions and services provided by the PLCP sublayer 102b. Accordingly, higher layer services may be adapted to utilize the services provided by the MAC sublayer 104a with little or no dependence on the PMD sublayer 102a.

802.11 is a suite of specifications promulgated by the Institute of Electrical and Electronics Engineers (IEEE), which provide communication standards for the MAC and physical (PHY) layer of the OSI model. The 801.11 standard also provides communication standards for wired and wireless local area networks (WLANs). More specifically, the 802.11 standard specifies five (5) types of physical layers for WLANs. These include, frequency hopping spread spectrum (FHSS), direct sequence spread spectrum (DSSS), infrared (IR) communication, high rate direct sequence spread spectrum spread spectrum (HR-DSS) and orthogonal frequency division multiplexing (OFDM). The 802.11 standard also provides a PLCP frame format for each of the specified PHY layers.

Over the past decade, demands for higher data rates to support applications such as streaming audio and streaming video, have seen Ethernet speeds being increased from about 1-2 megabit per second (Mbps), to 10 Mbps, to 100 Mbps, to 1 gigabit per second (Gbps) to 10 Gbps. Currently, there are a number of standards in the suite of specifications, namely 802.11b, 802.11a and 802.11g which have been adapted to facilitate the demands for increased data rates. The 802.11g standard for example, provides a maximum data rate of about 54 Mbps at a transmitter/receiver range of 19 meters (m) in a frequency range of 2.4 GHz to 2.4835 GHz. The 802.11b standard for example, provides a maximum data rate of about 11 Mbps at a transmitter/receiver range of 57 meters (m) in a frequency range of 2.4 GHz to 2.4835 GHz. Finally, the 802.11a standard for example, may be adapted to provide a maximum data rate of about 54 Mbps at a transmitter/receiver range of 12 meters (m) in a 300 MHz segmented bandwidth ranging from 5.150 GHz to 5.350 GHz and from 5.725 GHz to 5.825 GHz.

The 802.11 standard forms the basis of the other standards in the suite of specifications, and the 802.11b, 802.11a and 802.11g standards provide various enhancements and new features to their predecessor standards. Notwithstanding, there are certain elementary building blocks that are common to all the standards in the suite of specifications. For example, all the standards in the suite of specifications utilize the Ethernet protocol and utilize carrier sense multiple access with collision avoidance (CSMA/CA).

CSMA/CA utilizes a simple negotiation scheme to permit access to a communication medium. If a transmitting entity wishes to transmit information to a receiving entity, the transmitting entity may sense the communication medium for communication traffic. In a case where the communication medium is busy, the transmitting entity may desist from making a transmission and attempt transmission at a subsequent time. In a case where the communication transmission is not busy, then the transmitting entity may send information over the communication medium. Notwithstanding, there may be a case where two or more transmission entities sense that the communication medium is not busy and attempt transmission at the same instant. To avoid collisions and retransmissions, a CSMA/OR or ready to send (RTS) and clear to send (CTS) messaging scheme may be employed, for example. Accordingly, whenever a transmitting device senses that the communication medium is not busy, then the transmitting device may send a ready to send message to one or more receiving device. Subsequent to the receipt of the ready to send message, the receiving device may send a clear to send message. Upon receipt of the clear to send message by the transmitting device, the transmitting device may initiate transfer of data to the receiving device. Upon receiving packets or frames from the transmitting device, the receiving device may acknowledge the received frames.

The 802.11b standard, commonly called Wi-Fi, which represents wireless fidelity, is backward compatible with its predecessor standard 802.11. Although 802.11 utilizes one of two modulation formats including direct sequence spread spectrum (DSS) using differential binary phase shift keying and frequency hopping spread spectrum (11-bit Barker sequence), 802.11b utilizes a higher data rate form of DSS called complementary code keying (CCK). CCK permits higher data rate and particularly less susceptible to interference effects such as multipath-propagation interference, the PSK.

802.11a utilizes orthogonal frequency-division multiplexing (OFDM) modulation/encoding scheme, which provides a maximum data rate 54 Mbps. Orthogonal frequency-division multiplexing is a digital modulation technique which splits a signal into several narrowband channels, with each channel having a different frequency. Each narrowband channel is arranged so as to minimize the effects of crosstalk between the channels and symbols in the data stream.

Since equipment designed to provide support for 802.11a operates at frequencies in the ranges 5.150 GHz to 5.350 GHz and from 5.725 GHz to 5.825 GHz, 802.11a equipment will not interoperate with equipment designed to operate with the 802.11b standard which defines operation in the 2.4 to 2.4835 GHz frequency band. One major drawback is that companies that have invested in 802.11b equipment and infrastructure may not readily upgrade their network without significant expenditure.

The 802.11g standard was developed as an extension to 802.11b standard. The 802.11g standard may utilize a similar OFDM modulation scheme as the 802.11a standard and delivers speeds comparable with the 802.11a standard. Since 802.11g compatible equipment operates in the same portion of the electromagnetic spectrum as 802.11b compatible equipment, 802.11g is backwards compatible with existing 802.11b WLAN infrastructures. Due to backward compatibility of 802.11g with 802.11b, it would be desirable to have an 802.11b compliant radio card capable of interfacing directly with an 802.11g compliant access point and also an 802.11g compliant radio card capable of interfacing directly with an 802.11b compliant access point.

Furthermore although 802.11g compatible equipment operates in the 2.4 GHz to 2.4835 GHz frequency range, a typical transmitted signal utilizes a bandwidth of approximately 22 MHz, about a third or 30% of the total allocated bandwidth. This limits the number of non-overlapping channels utilized by an 802.11g access point to three (3). A similar scenario exists with 802.11b. Accordingly, many of the channel assignment and frequency reuse schemes associated with the 802.11b standard may be inherent in the 802.11g.

RF interference may pose additional operational problems with 802.11b and 802.11g equipment designed to operate in the 2.4 GHz portion of the electromagnetic spectrum. The 2.4 GHz portion of the spectrum is an unlicensed region which has been utilized for some time and is crowded with potential interfering devices. Some of these devices include cordless telephone, microwave ovens, intercom systems and baby monitors. Other potential interfering devices may be Bluetooth devices. Accordingly, interference poses interference problems with the 802.11b and 802.11g standards.

802.11a compatible equipment utilizes eight non-overlapping channels, as compared to three non-overlapping channels utilized by 802.11b. Accordingly, 802.11a access points may be deployed in a more dense manner than, for example 802.11b compatible equipment. For example, up to twelve access points each having a different assigned frequency may be deployed in a given area without causing co-channel interference. Consequently, 802.11a may be particularly useful in overcoming some of the problems associated with channel assignment, especially in areas that may have a dense user population and where increased throughput may be critical. Notwithstanding, the higher operating frequency of 802.11a causes more attenuation resulting in a shorter operating range at a given data rate. This may significantly increase deployment cost since a larger number of access points are required to service a given service area.

In hybrid wired/wireless network systems that may utilize one or more protocols in the 802.11 suite of protocols, the mobility of access devices throughout the network may pose additional challenges for conventional switches and switching equipment. Since access devices are continuously changing their point of access to the network, conventional switches may not have the capability to control other network devices and/or entities to provide a seamless and efficient communication throughout the network. In order to satisfy subscriber demands, certain quality and minimum service standards have to be maintained by a network system. For example, subscribers may expect to be connected at least 99.9% of the time when they attempt or initiate a connection. Additionally, subscribers may be willing to accept a minimal delay of a few milliseconds whenever they may be engaged in a voice call. However, operating outside the realm of acceptable standards may significantly affect customer satisfaction and loyalty. Notwithstanding, maintaining acceptable standards may be challenging in a continuously changing network. Moreover, particularly in network systems that may handle large volumes of access device traffic, conventional switching equipment may not have the necessary resources to effectively ensure and maintain acceptable standards. Additionally, since access device may be continuously mobile throughout the network, various network devices may become bottlenecks due to congestion, while other network devices having available capacity remain underutilized.

Further limitations and disadvantages of conventional and traditional approaches will become apparent to one of skill in the art, through comparison of such systems with some aspects of the present invention as set forth in the remainder of the present application with reference to the drawings.

Document EP-A-1 156 623 discloses a communication system with a plurality of access points and network stations, wherein communication between them being performed through a wireless communication protocol. In said communication system, a selection of a communication connection being performed using a predetermined cost function in association with a hand-over process.

Document WO 03/039054 A discloses a method being performed in a communication system comprising wireless LAN cells, wherein said method enable said wireless LAN cells to have an equal chance at establishing a session on the medium.

Document FR-A-2 834 606 discloses a communication network having a plurality of access points and mobile access devices. In said network, establishing of a connection being performed by a hand-over process.

Document US 2003/139197 A1 discloses a network comprising mobile stations and access points. In said network, establishing of a connection being performed based upon access point beacon signal levels and loading levels for various access points.

Document US 2002/071419 A1 discloses a method for load balancing in CDMA/HDR networks. In said method, establishing of a connection being performed based upon a function of a quality of forward communication links and capacity utilizations.

Document US 2003/133420 A1 discloses a method being performed in a data network comprising a plurality of access nodes being connected to a server. A number of hosts being arranged to communicate with said access nodes. Said controller controls the distribution of loads between said access nodes.

It is an object of the present invention to improve a roaming scenario between network switches.

This object is achieved by a method as indicated in new independent claim 1, a machine-readable storage as indicated in new independent claim 5 and a system as indicated in new independent claim 8.

Advantageous embodiments of the invention are defined in the dependent claims.

Aspects of the invention may provide a system and method for load balancing in a hybrid wired/wireless local area network. An exemplary method for load balancing in hybrid wired/wireless local area network may include the step of receiving a polling message of an access device by at least one of a plurality of access points. In response to the polling message, determining a load on one or more of the access points and sending the determined load from one or more of the access points to the access device. One or more of the access points located in an operating range of the access device may interpret the polling message. An access point having a least load may be selected by an access device to provide service.

The method may further include sending the polling message from one or more access points to a switch using a messaging protocol message and receiving at least one polling message by the switch. Accordingly, a load on one or more of the access points may be determined. Information corresponding to the determined load may be sent to one or more access points using a messaging protocol message. A load on one or more of the access points may subsequently be redistributed to provide an equitable load distribution among the access points.

Another exemplary embodiment of the invention may provide a machine-readable storage, having stored thereon a computer program having at least one code section for providing network management for a switch in a hybrid wired/wireless local area network, the at least one code section being executable by a machine for causing the machine to perform the steps described above.

Another exemplary embodiment of the invention may provide a system for load balancing in a hybrid wired/wireless local area network. The system for load balancing may include at least one receiver adapted to receive at least one polling message of an access device by at least one of a plurality of access points. At least one controller may be adapted to determine a load on each one of the plurality of access points in response to said at least one polling message. At least one transmitter may be adapted to send the determined load from one or more access points to the access device. The controller may also have the capability to select an access point from the plurality of access points which may have the least load.

The controller may also be adapted to interpret the polling message for one or more access point located in an operating range of the access device. The access device may also select an access point which may have the least load. The transmitter may be adapted to send the polling message from one or more access points to a switch using a messaging protocol message. The receiver, which may be associated with a switch, may be adapted to receive the polling message. The controller may be configured to determine a load on one or more access points. The controller may also have a capability to send information corresponding to the determined load to one or more access points using a messaging protocol message. Where there is a disproportionate load among the access points, the controller may be adapted to redistribute a load among the access points. The controller may be a bandwidth management controller, a quality of service controller, a load balancing controller a session controller, a processor and a network management controller.

According to an exemplary aspect of the invention, a method for providing load balancing in a hybrid wired/wireless local area network is provided, the method comprising:
receiving at least one polling message from an access device by at least one of a plurality of access points; and
responsive to said at least one polling message, determining a load on each one of said plurality of access points.

According to an exemplary aspect of the invention, a method for providing load balancing in a hybrid wired/wireless local area network comprises:
receiving at least one polling message from an access device by at least one of a plurality of access points;
responsive to said at least one polling message, determining a load on each one of said plurality of access points; and
sending said determined load of said each one of said access points to said access device.

Advantageously, the method further comprises interpreting said at least one polling message by at least one of said plurality of access points, which is located in an operating range of said access device.

Advantageously, the method further comprises selecting an access point from said plurality of access points having a least load.

Advantageously, the method further comprises selecting said access point having a least load by said access device to provide service.

Advantageously, the method further comprises:
sending said received at least one polling message from said at least one of a plurality of access points to a switch using a messaging protocol message; and
receiving said at least one polling message by said switch.

Advantageously, the method further comprises determining at least a load on at least a portion of said plurality of access points.

Advantageously, the method further comprises sending information corresponding to said determined load to at least a portion of said plurality of access points using a messaging protocol message.

Advantageously, the method further comprises redistributing a load on said at least a portion of said plurality of access points.

According to an exemplary aspect of the invention, a machine-readable storage is provided, having stored thereon a computer program having at least one code section for providing load management in a hybrid wired/wireless local area network, the at least one code section executable by a machine for causing the machine to perform the steps comprising:
receiving at least one polling message from an access device by at least one of a plurality of access points;
responsive to said at least one polling message, determining a load on each one of said plurality of access points; and
sending said determined load of said each one of said access points to said access device.

Advantageously, the machine-readable storage further comprises code for interpreting said at least one polling message by at least one of said plurality of access points, which is located in an operating range of said access device.

Advantageously, the machine-readable storage further comprises code for selecting an access point from said plurality of access points having a least load.

Advantageously, the machine-readable storage further comprises code for selecting said access point having a least load by said access device to provide service.

Advantageously, the machine-readable storage further comprises code for:
sending said received at least one polling message from said at least one of a plurality of access points to a switch using a messaging protocol message; and
receiving said at least one polling message by said switch.

Advantageously, the machine-readable storage further comprises code for determining at least a load on at least a portion of said plurality of access points.

Advantageously, the machine-readable storage further comprises code for sending information corresponding to said determined load to at least a portion of said plurality of access points using a messaging protocol message.

Advantageously, the machine-readable storage further comprises code for redistributing a load on said at least a portion of said plurality of access points.

According to an exemplary aspect of the invention, a system for providing network management in a hybrid wired/wireless local area network comprises:
at least one receiver adapted to receive at least one polling message from an access device by at least one of a plurality of access points;
at least one controller adapted to determine a load on each one of said plurality of access points in response to said at least one polling message; and
at least one transmitter adapted to send said determined load of said each one of said access points to said access device.

Advantageously, said at least one controller is adapted to interpret said at least one polling message by at least one of said plurality of access points, which is located in an operating range of said access device.

Advantageously, said at least one controller is adapted to select an access point from said plurality of access points having a least load.

Advantageously, said at least one controller is adapted to select said access point having a least load by said access device to provide service.

Advantageously, said at least one transmitter is adapted to send said received at least one polling message from said at least one of a plurality of access points to a switch using a messaging protocol message.

Advantageously, said at least one receiver is adapted to receive said at least one polling message by said switch.

Advantageously, said at least one controller is adapted to determine at least a load on at least a portion of said plurality of access points.

Advantageously, said at least one controller is adapted to send information corresponding to said determined load to at least a portion of said plurality of access points using a messaging protocol message.

Advantageously, said at least one controller is adapted to redistribute a load on said at least a portion of said plurality of access points.

Advantageously, said at least one controller is a bandwidth management controller, a quality of service controller, a load balancing controller, a session controller and a network management controller.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1a is a block diagram of the OSI model.

FIG. 1b is a block diagram illustrating a general PLCP frame as defined by 802.11.

FIG. 1c is a block diagram illustrating a PLCP frame utilized by frequency hopping spread spectrum as defined by 802.11.

FIG. 1d is a block diagram illustrating a PLCP frame for direct sequence spread spectrum and high rate direct sequence spread spectrum as defined by 802.11.

FIG. 1e is a block diagram illustrating a PLCP frame for orthogonal frequency division multiplexing as defined by 802.11.

FIG. 2 is a block diagram of an exemplary system for network management in a wireless local area network in accordance with an embodiment of the invention.

FIG. 3 is a block diagram of an exemplary Enterprise Wireless LAN having switches serving as the edge managers in accordance with an embodiment of the invention.

FIG. 4 is a block diagram of an exemplary switch as illustrated in FIG. 2 and FIG. 3 in accordance with an embodiment of the invention.

FIG. 5 is a block diagram of an exemplary switching system for bandwidth management in a wireless local area network in accordance with an embodiment of the invention.

FIG. 6 is a block diagram of an exemplary session control process as des with respect to FIG. 5 that may be utilized by the switching system for network management in accordance with an embodiment of the invention.

FIG. 7 is a block diagram of an exemplary load balancing process with respect to FIG. 6 that may be utilized by the switching system for network management in accordance with an embodiment of the invention.

FIG. 8 is a block diagram of an exemplary QoS enabling process with respect to FIG. 8 that may be utilized by an the switching system for network management in accordance with an embodiment of the invention.

FIG. 9a is a flowchart of exemplary steps for load balancing in accordance with an embodiment of the invention.

FIG. 9b is a flowchart of exemplary steps for load balancing in accordance with an embodiment of the invention.

### DETAILED DESCRIPTION OF THE INVENTION

Aspects of the invention may provide a system and method for load balancing in a hybrid wired/wireless local area network. A method for load balancing in a hybrid wired/wireless local area network may include the step of receiving a polling message from an access device by at least one of a plurality of access points. In response to the polling message, a load on one or more of the access points may be determined and the determined load of one or more of the access points may be received by the access device. One or more of the access points located within an operating range of the access device may interpret the polling message. An access point having a least load may be selected by an access device to provide service.

FIG. 1b is a block diagram 120 illustrating a general PLCP frame as defined by 802.11. Referring to FIG. 1b, there is shown preamble 122, PLCP header 124, MAC data 126, and CRC 128. Preamble 122 may include synchronization (SYNC) data 122a and synchronization delimiter 122b. The PLCP header 124 may include, for example PLCP signal field (PSF) 124a, service data 124b, length 124c and other fields. The preamble 122 may be dependent on the PHY. The SYNC data 122a may include a unique bit stream that may be adapted to signal timing parameters such as the start of a frame. The SYNC data 122a is used for bit synchronization and demodulation. The SYNC delimiter 122b provides frame timing information and may be adapted to delimit the end of synchronization information. The PLCP header 124 may be adapted to contain information used for decoding the frame. For example, the PSF 124a may be adapted to include communication data rate information. The service data 124b is generally reserved, but may be utilized to provide application specific functionality. The length 124c may be adapted to indicate the length of the MAC data 126. In this regard, the length 124c may be expressed in terms of the time required to transmit the MAC data 126.

FIG. 1c is a block diagram 130 illustrating a PLCP frame utilized by frequency hopping spread spectrum as defined by 802.11. Referring to FIG. 1c, there is shown a SYNC data 132, PLCP header 134 and PSDU 136. The PLCP header 134 may include, for example, PSDU length word (PLW) 134a, PLCP signaling field (PSF) 134b, header error check field or CRC 134c and other fields. The PLW 134a may specify the number of octets contained in the PSDU 136. The PSF 134 be may be 4-bits in length and may be used to denote the communication data rate.

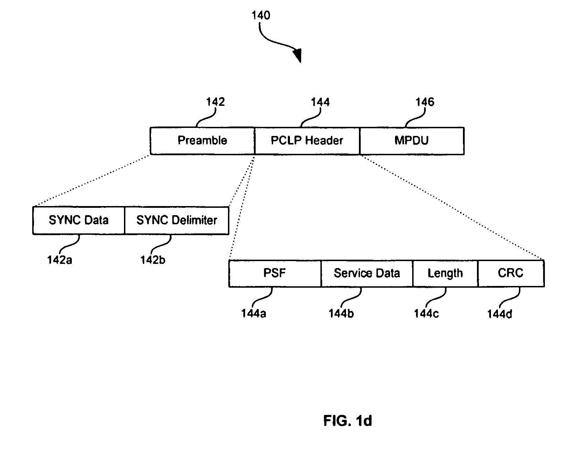

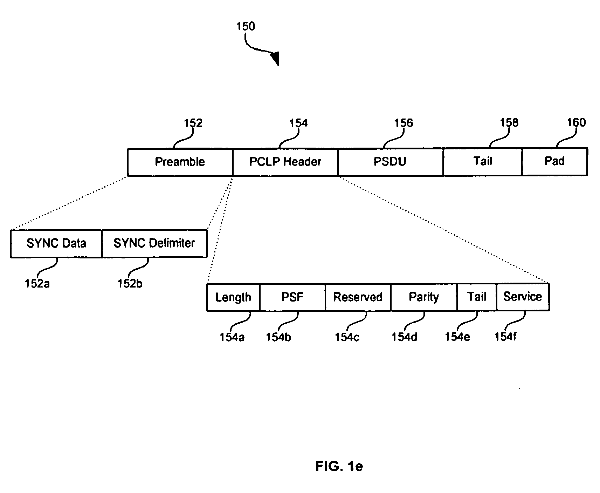

FIG. 1d is a block diagram 140 illustrating a PLCP frame for direct sequence spread spectrum and high rate direct sequence spread spectrum (HR-DSS) as defined by 802.11. Referring to FIG. 1d, there is shown preamble 142, PLCP header 144 and MPDU 146. Preamble 142 may include synchronization (SYNC) data 142a and synchronization delimiter 142b. The PLCP header 144 may include PLCP signal field (PSF) 144a, service data 144b, length 144c, and CRC field 144d. The SYNC data 142a may be 128 bits as compared to 8 bits for SYNC data 132a for frequency hopping spread spectrum. The CRC 144d is 16 bits, which is similar to CRC 134c for frequency hopping spread spectrum.

FIG. 1e is a block diagram 150 illustrating a PLCP frame for orthogonal frequency division multiplexing as defined by 802.11. Referring to FIG. 1e, there is shown preamble 152, PLCP header 154 and PSDU 156, tail 158 and pad 160. Preamble 152 may include synchronization (SYNC) data 152a and synchronization delimiter 152b. The PLCP header 154 may include length 154a, PLCP signal field (PSF) 154b, reserved field 154c, parity 154d, tail 154e and service 154f. The length 154a is a 12-bit field that may be adapted to indicate the length of the frame. The PSF 154b is a 4-bit field that may indicate a modulation scheme utilized and its associated coding rate of the PSDU. For example, the specification utilizes binary 1011 to represent 6 Mbps, 1111 to represent 9 Mbps, 1010 to represent 12 Mbps, 1110 to represent 18 Mbps, 1001 to represent 24 Mbps, 1011 to represent 36 Mbps, 1000 to represent 48 Mbps and finally, 1100 to represent the maximum standardized rate if 54 Mbps. The reserved field 154c is a 1 bit field that is reserved for future use and may be adapted for application specific use. The parity field 154d may indicate odd or even parity. The tail field 154e is a 6-bit field. The service field 154f is a 16-bit field that may be adapted to indicate the type of service.

In a typical wireless local area network, especially as access devices become mobile throughout the network, channel capacity may be rapidly time varying. For example, when the distance from an access device to an access point increases or decreases due to mobility, the channel capacity and ultimately the channel throughput may change due to continuous association and dis-association of access devices with access points. In accordance with an embodiment of the invention, a switch is provided to facilitate network management between one or more of a plurality of access devices and/or access points, and/or other switches. The switch may utilize a messaging protocol, which may be adapted to facilitate tasks such as load balancing quality of service (QoS) control and management, switch filter transfer, bandwidth management, and session control and management.

Referring to the task of load balancing, in a hybrid wired/wireless in which network capacity may be rapidly changing over time due to the mobility of access devices, some access points may be overwhelmed with traffic while other access points may be under utilized. Accordingly, an aspect of the invention provides a method and system that may be adapted to optimally balance a load among that access points in a hybrid wired/wireless LAN. The task of load balancing may be a part of a network management activity which may involve performing one or more activities including, but not limited to, QoS management, bandwidth management including tracking bandwidth usage and allocating and de-allocating bandwidth to meet user and/or client demands. The management of these activities may be directly or indirectly related to providing mobility and operability throughout a wired or wireless LAN, or a hybrid combination thereof.

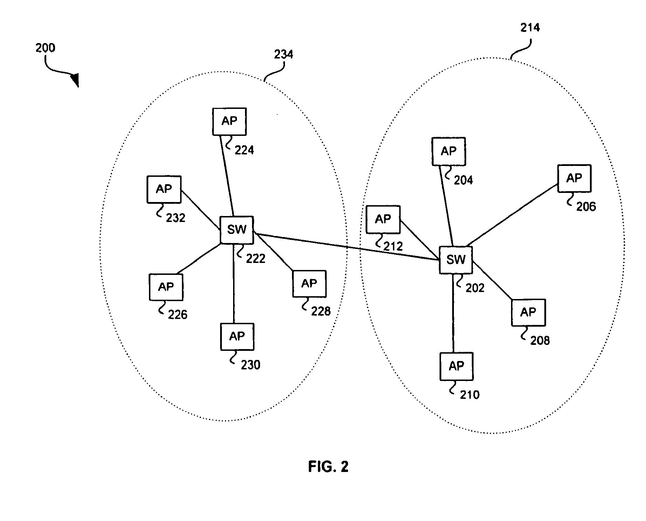

FIG. 2 is a block diagram of an exemplary system for network management in a wireless local area network in accordance with an embodiment of the invention. Referring to FIG. 2, there is illustrated a first networking domain 214 and a second networking domain 234. The first networking domain 214 may include a switch 202, and access points 204, 206, 208, 210, 212. Each of access points 204, 206, 208, 210, 212 may be coupled to the switch 202. The second networking domain 234 may include a switch 222, and access points 224, 226, 228, 230, 232. Each of access points 224, 226, 208, 230, 232 may be coupled to the switch 222. Switch 222 may be coupled to switch 202 through any one or more of a wired and a wireless medium. Although not shown, at least some of the access points in any one of the networking domains 214, 234 may be coupled to each other. Notwithstanding, a plurality of actual and/or virtual channels may be provided to facilitate communication with the access points and switches. Although the networking domains 214 and 234 are illustrated as separate networking entities, the invention is not so limited. Accordingly, the networking domain 214, 234 may be part of a single networking entity, but may represent separate security domains within the single networking entity.

In operation, any one or more of the switches 202, 222 may be adapted to send network management related information and parameters to any one or more of the access points in any one or more of the networking domains 214, 234. In one embodiment of the invention, for example, switch 202 may be adapted to communicate load balancing information to access point 206 and vice versa. Similarly, switch 202 may be adapted to send network management related information to any one or more of access points 204, 208, 210, 214 and vice versa. Similarly, switch 222 may be adapted to communicate load balancing related information to any one or more of access points 224, 226, 228, 230, 232 and vice versa. The load balancing information may be used by an access point to efficiently allocate, distribute and/or de-allocate system resources for associating and/or dissociating access devices.

In another aspect of the invention, the switches 202, 222 may be adapted to provide, for example, load balancing activities to the access points using for example a messaging protocol. Accordingly, some activities such as load balancing, bandwidth policing, bandwidth management, roaming and handover may be handled by coordinating one or more switches and one or more access points utilizing, for example, a messaging protocol. Notwithstanding, a switch for example, switch 222, may be configured to establish rules that may be adapted by the access points 224, 226, 228, 230, 232 in carrying out these activities. The rules may be propagated from the switches 222, 202 to the access points 204, 208, 210, 214, 224, 226, 228, 230, 232 using, for example, the messaging protocol. Prioritization and processing, for example, may be based on acceptable levels of latency and bandwidth availability. For example, an IP telephone call may be assigned highest queuing and processing priority in order to minimize latency. Policing, for example, may include performing activities which may limit and control the usage of available bandwidth by a particular access device or a type of access device. These and other tasks may be controlled by the switch using the messaging protocol. Although activities such as policing and QoS management and bandwidth management may be conducted independently of the load balancing, in accordance with an aspect of the invention, information may be exchange between these various activities to ensure optimal load balancing.

In operation, any one or more of the access points in any one or more of the networking domains may be adapted to determine various load related information and parameters which may be communicated to one or more of the switches 202, 222. In an embodiment of the invention, for example, access point 206 may be adapted to acquire various load related information and communicate the acquired information back to the switch 202. Similarly, any one or more of access points 204, 208, 210, 214 may acquire various load related information and parameters and communicate the acquired information to switch 202. In another aspect of the invention, any one or more of access points 224, 226, 228, 230, 232 may acquire various load related information and parameters and communicate the acquired information to the switch 222.

In another embodiment of the invention, any one or more of access points 224, 226, 228, 230, 232 may acquire various load related information and parameters and communicate the acquired information to the switch 202 through switch 222. This may be particularly useful in, for example, a roaming scenario or handoff scenario. In both the roaming and handoff scenarios where a particular access device is roaming or being handed off from networking domain 234 to networking domain 214, it may be advantageous to acquire bandwidth related information pertaining to networking domain 214 before permitting an access device to acquire service from networking domain 214. In this case, switch 222 may initiate a query requesting bandwidth related information from switch 202. Consequently, switch 214 may request bandwidth and/or load related information from any one or more of access points 204, 206, 208, 210, 212. Once switch 202 receives the bandwidth related information from these access points, it may communicate the information to the switch 222. Accordingly, the switch 222 may determine whether to handoff or permit roaming depending on the load and/or bandwidth related information received from the switch 202.

Based on, for example, QoS related information received from one or more access devices or switches, a switch may be adapted to force an access device to roam. For example, in a case where the switch determines that there may be insufficient bandwidth or channel capacity to provide a minimal acceptable QoS, then the switch may be adapted to dynamically force existing and/or new incoming access devices to roam. In one aspect of the invention, a list of devices that have been forced to roam may be maintained. Accordingly, if a switch determines that there is sufficient channel capacity available to provide a minimal acceptable QoS, then the switch may be adapted to signal or notify devices on the list to reattempt establishment of service and permit access to the service provided by the network. In this regard, any one or more of the switches 202, 222 may be adapted to determine the total available bandwidth or a load for any one or more of a plurality of access points and/or switches. Accordingly, the switches 202 and/or 222 may provide channel/frequency management and quality of service QoS management in order to optimally distribute load and optimize bandwidth utilization for the access devices.

In another embodiment of the invention, based on various load related information, an access prioritization scheme may be adapted and enforced by, for example, any one or more of the switches 202, 222. The prioritization scheme may include, establishing a priority for all network traffic, honoring prioritized traffic from all clients, and/or honoring prioritized traffic from some select clients such as trusted clients. In another aspect of the invention, the switches 202, 222 may be adapted to provide certain load management activities to the access points. Accordingly, some activities such as bandwidth policing, bandwidth management, packet prioritization and processing, and service type queuing may be handled by an access point.

Notwithstanding, a switch may be adapted to establish rules that may be utilized by the access points in carrying out these activities in order to maintain at least minimal acceptable level of service. Prioritization and processing, for example, may be based on, for example, acceptable levels of latency and bandwidth availability. For example, an IP telephone call may be assigned highest queuing and processing priority in order to minimize latency. Policing, for example, may include tasks which limit and control the usage of available bandwidth by a particular access device or a type of access device. Accordingly, bandwidth may be fairly distributed amongst access devices to ensure at least a minimal acceptable level of service.

In accordance with an aspect of the invention, the switch may utilize the messaging protocol (MP) to provide enhanced communication services to one or more of a plurality of access devices or mobile stations in, for example, an enterprise Wireless LAN (WLAN). The enhanced communication, in addition to ordinary WLAN device communication such as authentication, authorization, key exchanges, beacon broadcast, etc., may provide additional network management features not currently provided by a WLAN to its clients. These additional features may include, but are not limited to, quality of service management, bandwidth management, access control, load balancing and network management. In addition to switches, other enterprise WLAN devices that may utilize messaging protocol message transactions may include but are not limited to, wireless access points, enterprise switches and wireless stations. These devices may be messaging protocol enabled in certain instances, to take advantage of the new network management features.

In accordance with an aspect of the invention, an exemplary WLAN architecture may be provided. In the enterprise Wireless LAN environment, the wireless devices may be located at the edge of the network. The wireless devices may be connected or coupled to the enterprise network via the one or more access points, which in turn may be the edge devices of, for example, a wired LAN. The access points may be connected to the LAN via switches. These switches, which may be called wireless LAN switches, and in certain instances, may not only perform Layer 2 switching, but may be adapted to function as a wireless edge managers. They may also provide additional network management functionalities such as load balancing, bandwidth management, access control, firewall functions, and traffic privacy and quality of service management.

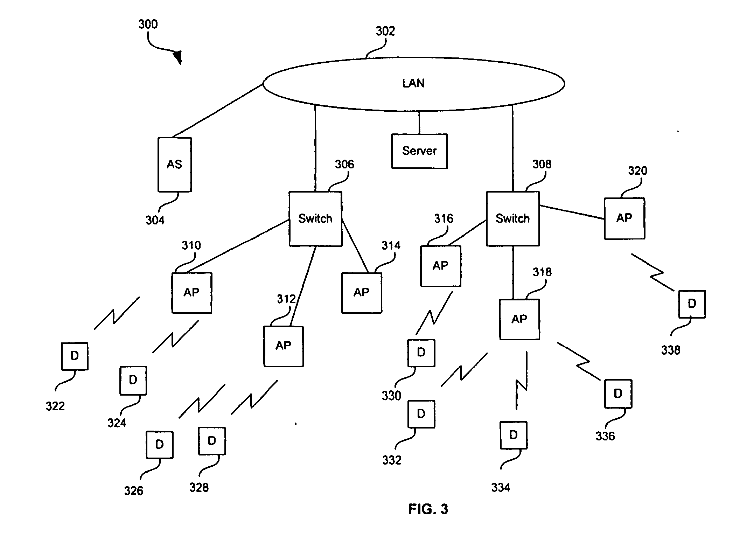

FIG. 3 is a block diagram 300 of an exemplary Enterprise Wireless LAN having switches serving as the edge managers in accordance with an embodiment of the invention. Referring to FIG. 3, there is shown, a local area network (LAN) 302, authentication server 304, switches 306, 308, access points (APs) 310, 312, 314, 316, 318, 320 and access devices 322, 324, 326, 328, 330, 332, 334, 336, 338. It should be recognized that the invention is not limited to and Enterprise WLAN. The invention may be applicable to a wired LAN, a wireless LAN and any combination thereof.

Wireless transmission or communication between the access devices or clients, and the access points may be secure. This may be also be true for the wired connections between any of the access points 310, 312, 314, 316, 318, 320 and the switches 306, 308. The switches 306, 308 and access points 310, 312, 314, 316, 318, 320 may be adapted to communicate using, for example, an Ethernet protocol. From the switch's perspective, the switch may be switching regular layer 2 frames. However, within the switch, knowledge of a WLAN and its management intelligence may reside primarily in software. Notwithstanding, the invention is not limited in this regard.

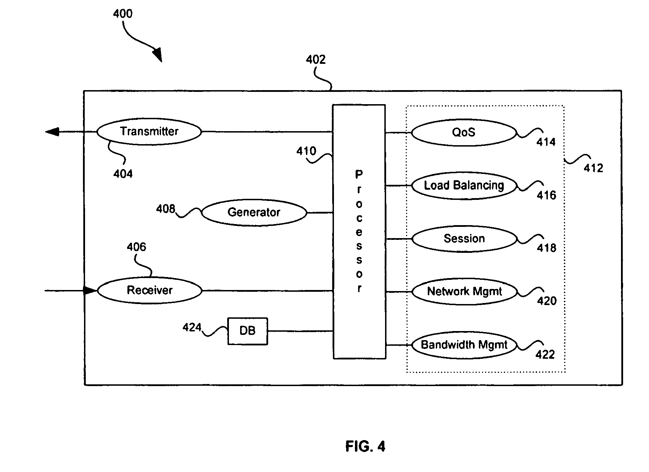

FIG. 4 is a block diagram 400 of an exemplary switch 402 as illustrated in FIG. 2 and FIG. 3 in accordance with an embodiment of the invention. Referring to FIG. 4, switch 402 may include a processor 410, transmitter 404, receiver 406, generator 408 and controller 412. The controller 412 may include QoS controller 414, bandwidth controller 422, load balancing controller 416, session controller 418 and network management controller 420. The transmitter 404, receiver 406, generator 408 and the components of the controller 412, namely QoS controller 414, load balancing controller 416, session controller 418 and network management controller 420, may be variously coupled to processor 410.

The components of switch 402 may include suitable circuitry and/or software capable of implementing the various network management functions, including but not limited to, load balancing, QoS management, bandwidth management, session management and control. Notwithstanding, although the components of the switch 402 are individually shown, the invention is not limited in this regard. For example, with suitable software and/or logic, the generator function 408 may be implemented solely by the processor 422. Similarly, any one or more of the bandwidth management, QoS management, load balancing, session management and control, and network management may be integrated, and with suitable logic and/or software, may be executed by the processor 410.

In operation, the transmitter 404 may be adapted to send a first messaging protocol message between a first switch and a first access point. The receiver 406 may be adapted to receive a second messaging protocol message from the first access point and the first switch. In response to the transmittal of the first messaging protocol message, a second messaging protocol message may be received. The controller 412 may be adapted to allocate system resources for one or more devices using any one or more of the first second and/or third messaging protocol messages. These devices may include but are not limited to the first switch, a second switch, the first access point, the second access point, and one or more access devices. The system resources may be allocated to ensure that at least minimal acceptable level of service is maintained.

The generator 408 may be adapted to generate the first messaging protocol message by the first switch. The receiver 406 may be adapted to receive the second messaging protocol message from a second switch. The processor 410 may be adapted to control the transmitter 404, the receiver 406, the controller 412 and the generator 408. The processor 410 may utilize one or more messaging protocol messages to control transmitter 404, receiver 406, generator 408, bandwidth controller 422, QoS controller 414, load balancing controller 416, session controller 418 and network management controller 420.

In accordance with an aspect of the invention, the switch may be adapted to facilitate network management, including activities such as, QoS management and bandwidth management, by utilizing a messaging protocol. The messaging protocol may utilize one or more protocols associated with a device communication protocol (DCP) umbrella (DCPU). The messaging protocol utilized by the switch may be adapted to run over the transmission control protocol (TCP) or user datagram protocol (UDP) using for example, a well-known port number specified under the framework of the device communication protocol. Under the DCP umbrella, there may be several sub-protocols defined for the purpose of facilitating interoperability with other products. Some of these products may include but are not limited to, cable modems and cable modem termination systems (CMTS) equipment. The messaging protocol utilized by the switch may be adapted to include the necessary protocols under DCP to facilitate communication for wired and/or WLAN devices.

In accordance with an aspect of the invention, the switch may utilize the messaging protocol to facilitate various network management activities between various wireless networking devices and/or clients. In an embodiment of the invention, one or more of WLAN switches 306, 308 may be adapted to utilize the messaging protocol to facilitate communication with one or more of the access points 310, 312, 314, 316, 318, 320 of FIG. 3. Information exchanged between these two devices may include, but is not limited to, control, configuration and status information of the devices and also client session information. At least some of this information may be used for load balancing. The control information may include, for example, signaling information that may be communicated in-band or out-of-band.

The switch may utilize the messaging protocol, which may include a plurality of message types. In accordance with an aspect of the invention, the switch may utilize a messaging protocol that may include, for example, six (6) categories of messages or message types. Notwithstanding, the invention is not so limited. These messages and their usage may be illustrated as follows:
**AP_Status: from AP to Switch or AP**
   An AP_Status message may be used to indicate, for example, an access point capacity, bandwidth allocation, the number of attached clients, signal strength, power levels, etc.
**AP_Config: from Switch to AP**
   An AP_Config message may be used to configure an access point to accommodate a client. This may include but is not limited to, 802.11e QoS, security information, etc.
**Switch_Status: from Switch to Switch**
   A Switch_Status message may be used to indicate a switch's association with one or more clients. This may include but is not limited to, client session information, access control, QoS parameters, etc.
**Switch_Config : from Switch to Switch**
   A Switch_Config message may be used to configure a switch such as a WLAN Switch to accommodate a client. The may include but is not limited to, access control, QoS configuration, etc.
**Client_Status: from AP to Switch**
   A Client_Status message may be used to indicate a client's information. This may include but is not limited to, client identification, associated MAC address, session status, connecting location, etc.
**Device_Discovery: any device to any device**
   In a client-server model of network services, the Device_Discovery message may be used by a switch and/or a server to discover clients or by client to discover servers. The message may be broadcast to some or all devices in the subnet to draw responses from the intended devices.

In each of the message types above, the message may include, for example four (4) message subtypes - .request, .data, .alert, and .ack. A message type/subtype pair of .request and .data may represent the request of data and a corresponding response of data itself. The subtype pair of .alert and .ack may represent the voluntary transmission of data and its acknowledgement. Additionally, there may be two conventions utilized in a message exchange sequence. Accordingly, if a message exchange sequence starts with a request (.req), it may be followed by a reactive transmission of data (.data). Similarly, if a message exchange sequence starts with a proactive transmission of data (.alert), it is followed by an acknowledgement (.ack). In accordance with an aspect of the invention, one or more message types and/or subtype may be used to facilitate bandwidth management.

United States Patent Application Serial No. 10/607,094 entitled "Communication System and Method in a Hybrid Wired/Wireless Local Area Network" filed on June 26, 2003, discloses a messaging protocol that may be utilized by the switch in accordance with an embodiment of the invention, and is incorporated herein by reference in its entirety. Exemplary valid fields and subfields for various messaging protocol messages that may be utilized by the switch in accordance with an aspect of the invention are disclosed therein. Additionally, United States Patent Application Serial No. (Attorney Docket No. 14178US02) entitled "Method and System for Providing an Intelligent Switch in a Hybrid Wired/Wireless Local Area Network" filed on September 9, 2003, discloses a messaging protocol that may be utilized by the switch in accordance with an embodiment of the invention, and is incorporated herein by reference in its entirety. The switch disclosed therein may be adapted to utilize the messaging protocol to provide network management in accordance with an embodiment of the invention.

In another embodiment of the invention, the switch may include a network management controller that may be configured for network management and may provide valuable information that may be utilized for load balancing. In this regard, the switch may be adapted to utilize, for example, the messaging protocol to transfer networking monitoring and/or status messages such as SNMP and RMON statistics from an old attachment or connection point to a new connection point. In this regard, the switch may be configured to use the messaging protocol to enable location-specific management of at least certain clients and/or network devices. In this regard, the switch may send client association information to a central management entity which may be aware of the location of the various access points and/or switches in the network. This information may be disseminated to, for example a QoS controller, a bandwidth controller and/or a load balancing controller. Accordingly, a decision may subsequently be made to determine whether to allow or disallow access from certain locations in order to maximize bandwidth usage, balance a load within the network and/or provide a specified QoS.

For example, information pertaining to at least some detected clients may be transferred to the switch. Accordingly, the load balancing manager and/or controller located in the switch may use this information to achieve efficient load balancing. In this regard, the load balancing controller may include suitable circuitry and/or software that may be adapted to receive and assess various client information and effectuate an efficient load balancing. Parameters such as signal strength, access level and device type, may be indicative of the information that may be used to effectuate optimal load balancing. Client association/dissociation information may be communicated between the load balancing manager and one or more access points and/or switches in order to ensure that an acceptable level of service may be received by accessing clients. Once the load-balancing manager determines an optimal load configuration, new client and/or access point association information may be passed to the various access points in the network using messaging protocol messages.

In another embodiment of the invention, the switch may include a QoS controller that may be configured to utilize the messaging protocol to transfer QoS parameters from an original switch port to a new switch port, in order to facilitate roaming. One or more switches in the network may be adapted to facilitate roaming between various access points located in the same network or between different networks. This may affect the QoS handling of, for example, downstream traffic destined for the roaming client or access device. In this regard, a switch may be adapted to utilize one or more messaging protocol messages to automatically transfer various pertinent centralized management may eliminate a need for a distributed management interface, thereby providing a more robust communication system.

In another embodiment of the invention, to facilitate roaming, a switch may be adapted to utilize the messaging protocol to transfer QoS parameters from an old access point to a new access point. This may affect upstream traffic from the client to an access point. In this regard, the switch may utilize one or more messaging protocol messages to transfer Q0S and load parameters from the old access point to the new access point. Since this handling of QoS and load parameters may be similar to the handling of client traffic, the messaging protocol may be used to provide seamless roaming, which may provide a greater level of acceptable service.

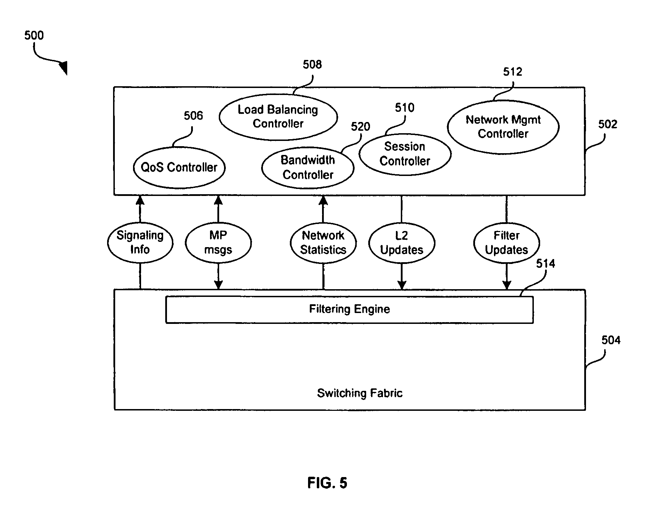

FIG. 5 is a block diagram 500 of an exemplary switching system for network management in a wireless local area network. Referring to FIG. 5, there is shown a CPU block 502 and a switching fabric block 804. The CPU block 502 may include a quality of service (QoS) controller block 506, a bandwidth management controller block 520, a load balancing controller block 508, a session controller block 510 and a network management control block 512. The switching fabric block 504 may include a filtering engine block 514. The CPU block 502 may be adapted to interface with the switching fabric block 504. One or more of the QoS controller block 506, load balancing controller block 508, session controller block 510 and network management control block 512 may interface directly with the filtering engine block 514.

In operation, selected signaling packets may be communicated from the switching fabric block 504 to one or more of the QoS controller block 506, bandwidth management controller block 520, load balancing controller block 508, session controller block 510 and network management control block 512. Messaging protocol messages may be used to facilitate communication between the switching fabric block 504 and one or more of the bandwidth management controller block 520, QoS controller block 506, load balancing controller block 508, session controller block 510 and network management control block 512. The selected signaling packets may include, but are not limited to, VolP packets, and streaming media packets including voice, video and data. The filtering engine block 514 may be adapted to filter information received from one or more of the QoS controller block 506, bandwidth management controller block 520, load balancing controller block 508, session controller block 510 and a network management control block 512. In this regard, the filtering engine block 514 may be adapted to filter messaging protocol messages used to control switching functions, network traffic statistics messages, layer two (2) address update messages, and filter update messages. The filter update messages may include, but is not limited to, QoS messages, bandwidth management messages, access control messages and load balancing messages.

In accordance with an embodiment of the invention, a session control process may be adapted to manage and control at least one client database and session information for some or all active clients. In an embodiment of the invention, the switching system for network management may be adapted to provide session management information that may be utilized for bandwidth management. The session control process may be configured to enforce access control based on, for example, a client session, a subnet, a network management application, and switch ports. Access control may be used to facilitate, for example, QoS management, bandwidth management and load balancing in at least a portion of the network. The session control process may also control and manage switching intelligence and to determine bandwidth availability in order to facilitate activities such as roaming.

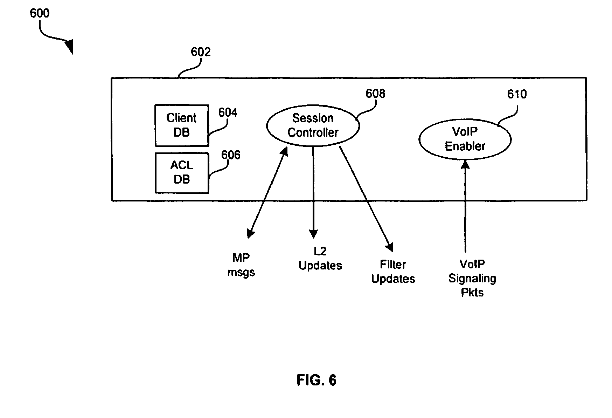

FIG. 6 is a block diagram 600 of an exemplary session control process with respect to FIG. 5 that may be utilized by the switching system for network management in accordance with an embodiment of the invention. Referring to FIG. 6, there is shown a session control process 602 having a client database 604, an access control list (ACL) database 606, a session control manager 608 and a VolP enabler 610. One or more interfaces may be adapted to provide communication between session manager 608 and the client database 604 and the ACL database 606. The session manager 608 may include at least one interface that may be adapted to facilitate communication with the VolP enabler 610.

The ACL may be adapted for filtering traffic based on identifiable attributed within a frame such as an Ethernet frame. Data may be filtered based on its source, destination or MAC address, the protocol utilized and various protocol-specific options such as FTP, TFTP, HTTP and SNMP.

In operation, the session control manager 608 may be adapted to process, for example, messaging protocol messages, layer two (2) updates, and filter updates. The session control manager 608 may be adapted to receive information from one or more of client database 604 and ACL database 606. The VolP enabler 610 may be adapted to process VolP signaling packets. VolP enabler 610 may also be adapted to decode various standards-based VolP signaling packets and prioritize filter setup. Information from the session control manager 608 may be communicated to the bandwidth management controller 520, the QoS controller 506, the load balancing controller 508, and the network management controller 512, which are illustrated in FIG. 5.

In an embodiment of the invention, the switching system 602 may include a load balancing process that may be adapted to obtain access point load from, for example, a QoS management process and a bandwidth management process. The network management process may include but is not limited to SNMP, RMON, RMON2, and MIB. The load balancing process may be adapted to keep an access point database on, for example, a plurality or bank of access points. The load balancing process may include necessary intelligence for making load distribution decisions.

The access point database may be accessible by one or more of the QoS controller 506, the bandwidth management controller 520, the load balancing controller 508, and the network management controller 512 which are illustrated in FIG. 5. In addition, the bandwidth management controller 520 may be adapted to request information from the session control manager 608 and/or the load balancing process in order to facilitate activities such as bandwidth management. Load balancing may optimize aggregate bandwidth and may provide intelligent client associations with an access device.

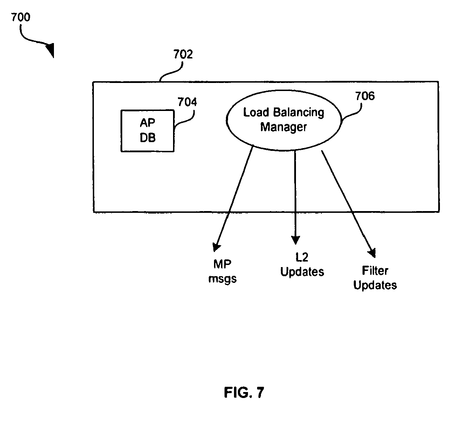

FIG. 7 is a block diagram 700 of an exemplary load balancing process with respect to FIG. 6 that may be utilized by the switching system for network management in accordance with an embodiment of the invention. Referring to FIG. 7, there is shown a load balancing process 702 having an access point database 702 and a load balancing manager 706. At least one interface may be adapted to provide communication between access point database 704 and the load balancing manager 706. The load balancing manager 706 may be adapted to include at least one interface that may facilitate communication with a network management process.

In operation, the load balancing manager 706 may be adapted to process messaging protocol messages, layer two (2) updates, and filter updates. The load balancing manager 706 may receive network statistics from a one or more network management processes. Information from the access point database 704 may be utilized by the load balancing manager 706 for making load balancing decisions.

In an embodiment of the invention, the switching system for network management may include load balancing may be adapted to control and manage activities such as, traffic policing, metering filters, and protocol configurations. In this regard, the QoS enabling process may be adapted to manage, for example, 8012.11e based configurations that may be sent to the access point. A VoIP enabler may be adapted to decode various standard-based VolP signaling packets and prioritize filter setup.

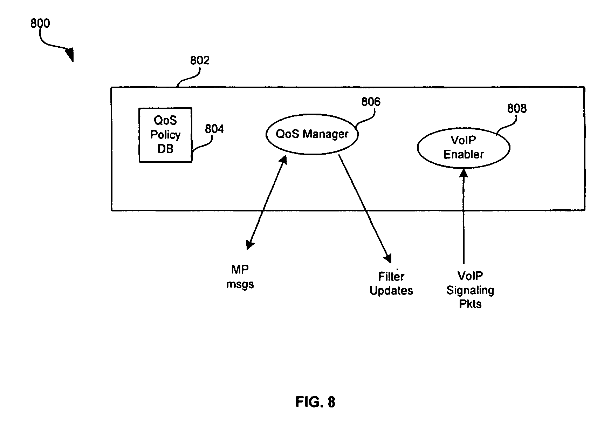

FIG. 8 is a block diagram 800 of an exemplary QoS enabling process with respect to FIG. 8 that may be utilized by an the switching system for network management in accordance with an embodiment of the invention. Referring to FIG. 8, there is shown QoS enabling process 802 having QoS policy database 804, a QoS manager 806 and a VolP enabler 808. At least one interface may be adapted to provide communication between QoS policy database 804 and the QoS manager 806. The QoS manager 806 may be adapted to include at least one interface that may facilitate communication with, for example, the VoIP enabler 808.

In operation, the QoS manager 806 may be adapted to process, for example, messaging protocol messages, and filter updates. The QoS manager 806 may send and receive VoIP signaling information to and from VolP enabler 808 806 for making QoS related decisions. In certain instances, information related to the QoS management may be utilized for bandwidth management. Accordingly, with reference to FIG. 4, the bandwidth management controller 412 may be adapted to receive pertinent QoS related information from the QoS controller 414'.

In one aspect of the invention, the QoS controller 414, the load balancing controller 416, the session controller 418, the network management controller 420 and/or the bandwidth management controller 412 may be adapted to transfer and/or store information in a database, for example, database 424. In this regard, the QoS controller may be adapted to store at least some of its related QoS related information in database 424. Accordingly, whenever a need arises, the load balancing controller 416 may access database 424 and retrieve any QoS related information that may be pertinent to bandwidth management.

In another aspect of the invention, in certain instances, the load balancing controller 416 may be adapted to request related load information from bandwidth management controller 422 and/or QoS from the QoS controller 414. To facilitate load balancing, real-time information not necessarily located in the database 424 may be requested from the QoS controller 414 or bandwidth controller 422 whenever a need arises. Additionally, through this mechanism, the load balancing controller 416 may be adapted to also request an receive related information from the session controller 418, the network management controller 420 and/or the database 424. The load balancing process may be executed in an adaptive manner and may occur in real-time.

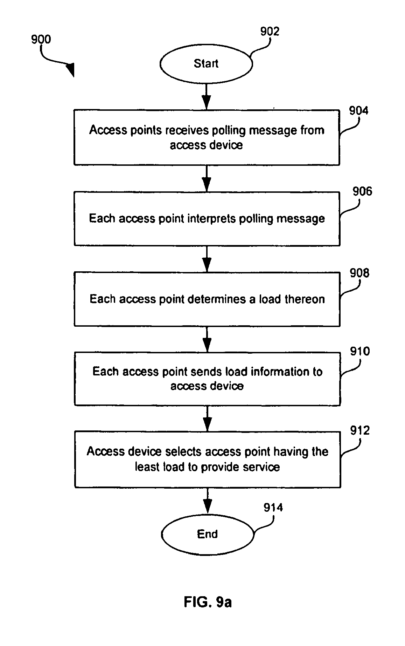

FIG. 9a is a flowchart 900 of exemplary steps for load balancing in accordance with an embodiment of the invention. Referring to FIG. 9a, subsequent to start step 902, in step 904, access points may receive polling message from access device. In step 906, each access point may interpret the polling message. In step 908, each access point may determine a load thereon. In step 910, each access point may send load information to the polling access device. In step 912, the polling access device may select the access point having the least load to provide service. Subsequent to step 912, the exemplary steps may end with step 914.

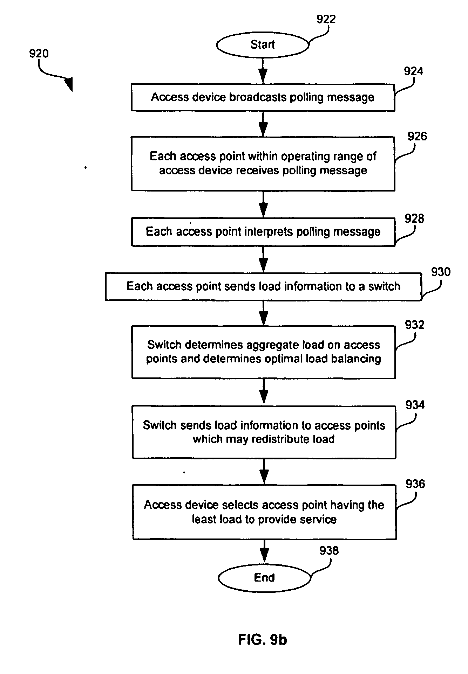

FIG. 9b is a flowchart 920 of exemplary steps for load balancing in accordance with an embodiment of the invention. Referring to FIG. 9b, subsequent to start step 922, in step 924, an access device may broadcast a polling message. In step 926, each access point within operating range of the polling access device may receive the polling message. In step 928, each access point may interpret the polling message. In step 930, each access point may send load information to a switch. In step 932, the switch may determine the aggregate load on the access points and determine and optimal load balancing. In step 934, the switch may sent load information to the access points which may redistribute their load. In step 936, the access device may select an access point having the least load to provide service. Subsequent to step 936, the exemplary steps may end with step 938.

Notwithstanding, the exemplary steps illustrated in FIG. 9a and FIG. 9b, it should be recognized that other steps may be added, substituted or made optional without departing from the scope of the invention. Referring to FIG. 9a, for example, step 904 may be an optional step. In this regard, an access point and/or a switch may be adapted to send QoS information, for example in a dynamic manner, using a messaging protocol message to the switch.

In accordance with another embodiment of the invention, dependent on the modulation scheme utilized, one or more of the PLCP frames illustrated in FIG. 1b, FIG. 1c, FIG. 1d and FIG. 1e may be adapted to contain information which may be utilized for providing communication in accordance with various embodiments of the invention. Additionally, the PLCP frames may be adapted to convey information for any one or more of the 801.11a, 802.11b and 802.11g modes of operation utilized by access points and/or access devices in accordance the embodiments of the invention.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention also may be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

Notwithstanding, the invention and its inventive arrangements disclosed herein may be embodied in other forms without departing from the spirit or essential attributes thereof. Accordingly, reference should be made to the following claims, rather than to the foregoing specification, as indicating the scope of the invention. In this regard, the description above is intended by way of example only and is not intended to limit the present invention in any way, except as set forth in the following claims.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for providing load balancing in a hybrid wired/wireless local area network (200; 300), said local area network (200; 300) comprising a first and a second switch (202, 222; 306, 308) serving a first and a second network domain (214, 234), respectively, each switch having wired connections to a plurality of access points (204, 206, 208, 210, 212; 224, 226, 228, 230, 232) in its domain, said access points (204, 206, 208, 210, 212; 224, 226, 228, 230, 232) being adapted to establish wireless connections to a plurality of access devices (322-338), said method comprising:
receiving at least one polling message from one of said access devices (322-338) by at least one of a plurality of access points (204, 206, 208, 210, 212; 224, 226, 228, 230, 232);
sending said received at least one polling message from said at least one of a plurality of access points (204, 206, 208, 210, 212; 224, 226, 228, 230, 232) to its corresponding switch (202, 222; 306, 308) using a messaging protocol message;
receiving said at least one polling message by said corresponding switch; and
responsive to said at least one polling message, determining a load on each one of said plurality of access points (204, 206, 208, 210, 212; 224, 226, 228, 230, 232) of both first and second network domains (214, 234), wherein the load information of said access points (204, 206, 208, 210, 212; 224, 226, 228, 230, 232) of said first and second domain is communicated between said switches using said messaging protocol message.

2. The method according to claim 1, further comprising sending said determined load of said each one of said access points (204, 206, 208, 210, 212; 224, 226, 228, 230, 232) to said access device (322-338).

3. The method according to claim 1 or 2, further comprising interpreting said at least one polling message by at least one of said plurality of access points (204, 206, 208, 210, 212; 224, 226, 228, 230, 232), which is located in an operating range of said access device (322-338).

4. The method according to any of the preceding claims, further comprising selecting an access point (204, 206, 208, 210, 212; 224, 226, 228, 230, 232) from said plurality of access points (204, 206, 208, 210, 212; 224, 226, 228, 230, 232) having a least load.

5. A machine-readable storage, having stored thereon a computer program having at least one code section for providing load management in a hybrid wired/wireless local area network (200; 300), said local area network (200; 300) comprising a first and a second switch (202, 222; 306, 308) serving a first and a second network domain (214, 234), respectively, each switch having wired connections to a plurality of access points (204, 206, 208, 210, 212; 224, 226, 228, 230, 232) in its domain, said access points (204, 206, 208, 210, 212; 224, 226, 228, 230, 232) being adapted to establish wireless connections to a plurality of access devices (322-338), said at least one code section executable by a machine for causing said machine to perform the steps comprising:
receiving at least one polling message from one of said access devices (322-338) by at least one of a plurality of access points (204, 206, 208, 210, 212; 224, 226, 228, 230, 232);
sending said received at least one polling message from said at least one of a plurality of access points (204, 206, 208, 210, 212; 224, 226, 228, 230, 232) to its corresponding switch (202, 222; 306, 308) using a messaging protocol message;
receiving said at least one polling message by said corresponding switch; and
responsive to said at least one polling message, determining a load on each one of said plurality of access points (204, 206, 208, 210, 212; 224, 226, 228, 230, 232) of both first and second network domains (214, 234), wherein the load information of said access points (204, 206, 208, 210, 212; 224, 226, 228, 230, 232) of said first and second domain is communicated between said switches using said messaging protocol message.

6. The machine-readable storage according to claim 5, further comprising code for interpreting said at least one polling message by at least one of said plurality of access points (204, 206, 208, 210, 212; 224, 226, 228, 230, 232), which is located in an operating range of said access device (322-338).

7. The machine-readable storage according to claim 6, further comprising code for selecting an access point (204, 206, 208, 210, 212; 224, 226, 228, 230, 232) from said plurality of access points (204, 206, 208, 210, 212; 224, 226, 228, 230, 232) having a least load.

8. A system for providing network management in a hybrid wired/wireless local area network (200; 300), said local area network (200; 300) comprising a first and a second switch (202, 222; 306, 308) serving a first and a second network domain (214, 234), respectively, each switch having wired connections to a plurality of access points (204, 206, 208, 210, 212; 224, 226, 228, 230, 232) in its domain, said access points (204, 206, 208, 210, 212; 224, 226, 228, 230, 232) being adapted to establish wireless connections to a plurality of access devices (322-338), said system comprising:
at least one receiver (406) being adapted to receive at least one polling message from one of said access devices (322-338) over at least one of a plurality of access points (204, 206, 208, 210, 212; 224, 226, 228, 230, 232);
at least one transmitter (404) being adapted to send said received at least one polling message from said at least one of a plurality of access points (204, 206, 208, 210, 212; 224, 226, 228, 230, 232) to its corresponding switch (202, 222; 306, 308) using a messaging protocol message;
said at least one receiver (406) being further adapted to receive said at least one polling message by said corresponding switch; and
at least one controller (412) being adapted to determine a load on each one of said plurality of access points (204, 206, 208, 210, 212; 224, 226, 228, 230, 232) of both first and second network domains (214, 234) in response to said at least one polling message;
said at least one transmitter (404) being adapted to communicate said load information of said access points (204, 206, 208, 210, 212; 224, 226, 228, 230, 232) of said first and second domain between said switches using said messaging protocol message.

9. The system according to claim 8, wherein said at least one controller (412) is adapted to interpret said at least one polling message over at least one of said plurality of access points (204, 206, 208, 210, 212; 224, 226, 228, 230, 232), which is located in an operating range of said access device (322-338).

10. The system according to claim 9, wherein said at least one controller (412) is adapted to select an access point (204, 206, 208, 210, 212; 224, 226, 228, 230, 232) from said plurality of access points (204, 206, 208, 210, 212; 224, 226, 228, 230, 232) having a least load.

## Patentansprüche

1. Verfahren zum Zurverfügungstellen eines Lastausgleichs in einem hybriden fest verdrahteten/drahtlosen lokalen Netz (200; 300), wobei das lokale Netz (200; 300) einen ersten und einen zweiten Switch (202, 222; 306, 308) aufweist, die eine erste bzw. eine zweite Netzdomäne (214, 234) bedienen, wobei jeder Switch fest verdrahtete Verbindungen mit einer Mehrzahl von Zugangspunkten (204, 206, 208, 210, 212; 224, 226, 228, 230, 232) in seiner Domäne aufweist, wobei die Zugangspunkte (204, 206, 208, 210, 212; 224, 226, 228, 230, 232) dazu ausgelegt sind, drahtlose Verbindungen mit einer Mehrzahl von Zugangsvorrichtungen (322-338) herzustellen, wobei das Verfahren umfasst:
Empfangen von mindestens einer Abfragenachricht von einer der Zugangsvorrichtungen (322-338) durch mindestens einen von einer Mehrzahl von Zugangspunkten (204, 206, 208, 210, 212; 224, 226, 228, 230, 232);
Senden der mindestens einen empfangenen Abfragenachricht von dem mindestens einen von einer Mehrzahl von Zugangspunkten (204, 206, 208, 210, 212; 224, 226, 228, 230, 232) an seinen entsprechenden Switch (202, 222; 306, 308) unter Verwendung einer Benachrichtigungsprotokoll-Nachricht;
Empfangen der mindestens einen Abfragenachricht durch den entsprechenden Switch; und
im Ansprechen auf die mindestens eine Abfragenachricht, Bestimmen einer Last an jedem der Mehrzahl von Zugangspunkten (204, 206, 208, 210, 212; 224, 226, 228, 230, 232) von sowohl der ersten als auch der zweiten Netzdomäne (214, 234), wobei die Lastinformation der Zugangspunkte (204, 206, 208, 210, 212; 224, 226, 228, 230, 232) der ersten und der zweiten Domäne unter Verwendung der Benachrichtigungsprotokoll-Nachricht zwischen den Switches übertragen wird.

2. Verfahren nach Anspruch 1, welches ferner das Senden der bestimmten Last eines jeden der Zugangspunkte (204, 206, 208, 210, 212; 224, 226, 228, 230, 232) an die Zugangsvorrichtung (322-338) umfasst.

3. Verfahren nach Anspruch 1 oder 2, welches ferner das Interpretieren der mindestens einen Abfragenachricht durch mindestens einen der Mehrzahl von Zugangspunkten (204, 206, 208, 210, 212; 224, 226, 228, 230, 232) umfasst, der in einem Betriebsbereich der Zugangsvorrichtung (322-338) liegt.

4. Verfahren nach einem der vorhergehenden Ansprüche, welches ferner das Auswählen eines Zugangspunktes (204, 206, 208, 210, 212; 224, 226, 228, 230, 232) aus der Mehrzahl von Zugangspunkten (204, 206, 208, 210, 212; 224, 226, 228, 230, 232) mit einer geringsten Last umfasst.

5. Maschinenlesbarer Speicher, auf dem ein Computerprogramm gespeichert ist, das mindestens eine Code-Sektion aufweist, um eine Lastverwaltung in einem hybriden fest verdrahteten/drahtlosen lokalen Netz (200; 300) zur Verfügung zu stellen, wobei das lokale Netz (200; 300) einen ersten und einen zweiten Switch (202, 222; 306, 308) aufweist, die eine erste bzw. eine zweite Netzdomäne (214, 234) bedienen, wobei jeder Switch fest verdrahtete Verbindungen mit einer Mehrzahl von Zugangspunkten (204, 206, 208, 210, 212; 224, 226, 228, 230, 232) in seiner Domäne aufweist, wobei die Zugangspunkte (204, 206, 208, 210, 212; 224, 226, 228, 230, 232) dazu ausgelegt sind, drahtlose Verbindungen mit einer Mehrzahl von Zugangsvorrichtungen (322-338) zur Verfügung zu stellen, wobei die mindestens eine Code-Sektion durch eine Maschine ausführbar ist, um die Maschine zu veranlassen, die folgenden Schritte durchzuführen, welche umfassen:
Empfangen mindestens einer Abfragenachricht von einer der Zugangsvornchtungen (322-338) durch mindestens einen von einer Mehrzahl von Zugangspunkten (204, 206, 208, 210, 212; 224, 226, 228, 230, 232);
Senden der empfangenen mindestens einen Abfragenachricht von dem mindestens einen von einer Mehrzahl von Zugangspunkten (204, 206, 208, 210, 212; 224, 226, 228, 230, 232) an seinen entsprechenden Switch (202, 222; 306, 308) unter Verwendung einer Benachrichtigungsprotokoll-Nachricht;
Empfangen der mindestens einen Abfragenachricht durch den entsprechenden Switch; und
im Ansprechen auf die mindestens eine Abfragenachricht, Bestimmen einer Last an jedem der Mehrzahl von Zugangspunkten (204, 206, 208, 210, 212; 224, 226, 228, 230, 232) sowohl der ersten als auch der zweiten Netzdomäne (214, 234), wobei die Lastinformation der Zugangspunkte (204, 206, 208, 210, 212; 224, 226, 228, 230, 232) der ersten und der zweiten Domäne zwischen den Switches unter Verwendung der Benachrichtigungsprotokoll-Nachricht übertragen wird.

6. Maschinenlesbarer Speicher nach Anspruch 5, welcher ferner Code zum Interpretieren der mindestens einen Abfragenachricht durch mindestens einen von der Mehrzahl von Zugangspunkten (204, 206, 208, 210, 212; 224, 226, 228, 230, 232) aufweist, der in einem Betriebsbereich der Zugangsvorrichtung (322-338) liegt.

7. Maschinenlesbarer Speicher nach Anspruch 6, welcher ferner Code zum Auswählen eines Zugangspunktes (204, 206, 208, 210, 212; 224, 226, 228, 230, 232) aus der Mehrzahl von Zugangspunkten (204, 206, 208, 210, 212; 224, 226, 228, 230, 232) mit einer geringsten Last aufweist.

8. System zum Zurverfügungstellen einer Netzverwaltung in einem hybriden fest verdrahteten/drahtlosen lokalen Netz (200; 300), wobei das lokale Netz (200; 300) einen ersten und einen zweiten Switch (202, 222; 306, 308) aufweist, die eine erste bzw. eine zweite Netzdomäne (214, 234) bedienen, wobei jeder Switch fest verdrahtete Verbindungen mit einer Mehrzahl von Zugangspunkten (204, 206, 208, 210, 212; 224, 226, 228, 230, 232) in seiner Domäne aufweist, wobei die Zugangspunkte (204, 206, 208, 210, 212; 224, 226, 228, 230, 232) dazu ausgelegt sind, drahtlose Verbindungen mit einer Mehrzahl von Zugangsvorrichtungen (322-338) herzustellen, wobei das System aufweist:
mindestens einen Empfänger (406), der dazu ausgelegt ist, mindestens eine Abfragenachricht von einer der Zugangsvornchtungen (322-338) über mindestens einen von einer Mehrzahl von Zugangspunkten (204, 206, 208, 210, 212; 224, 226, 228, 230, 232) zu empfangen;
mindestens einen Sender (404), der dazu ausgelegt ist, die empfangene mindestens eine Abfragenachricht von dem mindestens einen von einer Mehrzahl von Zugangspunkte (204, 206, 208, 210, 212; 224, 226, 228, 230, 232) unter Verwendung einer Benachrichtigungsprotokoll-Nachricht an seinen entsprechenden Switch (202, 222; 306, 308) zu senden;
wobei der mindestens eine Empfänger (406) ferner dazu ausgelegt ist, die mindestens eine Abfragenachricht durch den entsprechenden Switch zu empfangen; und
mindestens einen Controller (412), der dazu ausgelegt ist, eine Last an jedem von der Mehrzahl von Zugangspunkten (204, 206, 208, 210, 212; 224, 226, 228, 230, 232) sowohl der ersten als auch der zweiten Netzdomäne (214, 234) im Ansprechen auf die mindestens eine Abfragenachricht zu bestimmen;
wobei der mindestens eine Sender (404) dazu ausgelegt ist, die Lastinformation der Zugangspunkte (204, 206, 208, 210, 212; 224, 226, 228, 230, 232) der ersten und der zweiten Domäne unter Verwendung der Benachrichtigungsprotokoll-Nachricht zwischen den Switches zu übertragen.

9. System nach Anspruch 8, wobei der mindestens eine Controller (412) dazu ausgelegt ist, die mindestens eine Abfragenachricht über mindestens einen der Mehrzahl von Zugangspunkten (204, 206, 208, 210, 212; 224, 226, 228, 230, 232) zu interpretieren, der in einem Betriebsbereich der Zugangsvorrichtung (322-338) liegt.

10. System nach Anspruch 9, wobei der mindestens eine Controller (412) dazu ausgelegt ist, einen Zugangspunkt (204, 206, 208, 210, 212; 224, 226, 228, 230, 232) aus der Mehrzahl von Zugangspunkten (204, 206, 208, 210, 212; 224, 226, 228, 230, 232) mit einer geringsten Last auszuwählen.

## Revendications

1. Procédé pour fournir un équilibrage de charge dans un réseau local câblé/sans fil hybride (200 ; 300), ledit réseau local (200 ; 300) comprenant un premier et un second commutateur (202, 222 ; 306, 308) ayant un premier et un second domaine de réseau (214, 234), respectivement, chaque commutateur ayant des connexions câblées à une pluralité de points d'accès (204, 206, 208, 210, 212 ; 224, 226, 228, 230, 232) dans son domaine, lesdits points d'accès (204, 206, 208, 210, 212 ; 224, 226, 228, 230, 232) étant aptes à établir des connexions sans fil à une pluralité de dispositifs d'accès (322-338), ledit procédé comprenant les étapes consistant à :
recevoir au moins un message d'appel à partir de l'un desdits dispositifs d'accès (322-338) par au moins l'un d'une pluralité de points d'accès (204, 206, 208, 210, 212 ; 224, 226, 228, 230, 232) ;
envoyer ledit au moins un message d'appel reçu à partir dudit au moins l'un d'une pluralité de points d'accès (204, 206, 208, 210, 212 ; 224, 226, 228, 230, 232) à son commutateur correspondant (202, 222 ; 306, 308) en utilisant un message de protocole de messagerie ;
recevoir ledit au moins un message d'appel par ledit commutateur correspondant ; et
en réponse à au moins un message d'interrogation, déterminer une charge sur chacun d'au moins l'un de ladite pluralité de points d'accès (204, 206, 208, 210, 212 ; 224, 226, 228, 230, 232) à la fois des premier et second domaines de réseau (214, 234), procédé dans lequel les informations de charge desdits points d'accès (204, 206, 208, 210, 212 ; 224, 226, 228, 230, 232) desdits premier et second domaines sont communiquées entre lesdits commutateurs utilisant ledit message de protocole de messagerie.

2. Procédé selon la revendication 1, comprenant de plus l'envoi de ladite charge déterminée de chacun desdits points d'accès (204, 206, 208, 210, 212 ; 224, 226, 228, 230, 232) au dispositif d'accès (322-338).

3. Procédé selon la revendication 1 ou 2, comprenant de plus l'interprétation dudit au moins un message d'appel par au moins un de ladite pluralité de points d'accès (204, 206, 208, 210, 212 ; 224, 226, 228, 230, 232) qui est situé dans une plage de fonctionnement dudit dispositif d'accès (322-338).

4. Procédé selon l'une quelconque des revendications précédentes, comprenant de plus la sélection d'un point d'accès (204, 206, 208, 210, 212 ; 224, 226, 228, 230, 232) à partir de ladite pluralité de points d'accès (204, 206, 208, 210, 212 ; 224, 226, 228, 230, 232) ayant la plus petite charge.

5. Mémoire lisible par une machine, comportant en mémoire un programme ordinateur ayant au moins une section de code pour fournir la gestion de charge dans un réseau local câblé/sans fil hybride (200 ; 300), ledit réseau local (200 ; 300) comprenant un premier et un second commutateur (202, 222 ; 306, 308) servant un premier et un second domaine de réseau (214, 234), respectivement, chaque commutateur ayant des connexions câblées à une pluralité de points d'accès (204, 206, 208, 210, 212 ; 224, 226, 228, 230, 232) dans son domaine, lesdits points d'accès (204, 206, 208, 210, 212 ; 224, 226, 228, 230, 232) étant aptes à établir des connexions sans câble à une pluralité de dispositifs d'accès (322-338), ladite au moins une section de code pouvant être exécutée par une machine pour faire en sorte que ladite machine effectue les étapes comprenant:
la réception d'au moins un message d'appel à partir de l'un desdits dispositifs d'accès (322-338) par au moins l'un d'une pluralité de points d'accès (204, 206, 208, 210, 212 ; 224, 226, 228, 230, 232) ;
l'envoi dudit au moins un message d'appel reçu à partir dudit au moins l'un d'une pluralité de points d'accès (204, 206, 208, 210, 212 ; 224, 226, 228, 230, 232) à son commutateur correspondant (202, 222 ; 306, 308) en utilisant un message de protocole de messagerie ;
la réception dudit au moins un message d'appel par ledit commutateur correspondant ; et
en réponse audit au moins un message d'appel, la détermination d'une charge sur chacun de ladite pluralité de points d'accès (204, 206, 208, 210, 212 ; 224, 226, 228, 230, 232) à la fois des premier et second domaines de réseau (214, 234), procédé dans lequel les informations de charge desdits points d'accès (204, 206, 208, 210, 212 ; 224, 226, 228, 230, 232) desdits premier et second domaines sont communiquées entre lesdits commutateurs utilisant ledit message de protocole de messagerie.

6. Mémoire lisible par machine selon la revendication 5, comprenant de plus un code pour interpréter ledit au moins un message d'appel par au moins l' un de ladite pluralité de points d'accès (204, 206, 208, 210, 212 ; 224, 226, 228, 230, 232) qui est situé dans une plage de fonctionnement dudit dispositif d'accès (322-338).

7. Mémoire lisible par machine selon la revendication 6, comprenant de plus un code pour choisir un point d'accès (204, 206, 208, 210, 212 ; 224, 226, 228, 230, 232) à partir de ladite pluralité de points d'accès (204, 206, 208, 210, 212 ; 224, 226, 228, 230, 232) ayant la plus petite charge.

8. Système pour assurer la gestion de réseau dans un réseau local câblé/sans fil (200 ; 300), ledit réseau local (200 ; 300) comprenant un premier et un second commutateur (202, 222 ; 306, 308) servant un premier et un second domaine de réseau (214, 234), respectivement, chaque commutateur ayant des connexions câblées à une pluralité de points d'accès (204, 206, 208, 210, 212 ; 224, 226, 228, 230, 232) dans son domaine, lesdits points d'accès (204, 206, 208, 210, 212 ; 224, 226, 228, 230, 232) étant aptes à établir des connexions sans câble à une pluralité de dispositifs d'accès (322-338), ledit système comprenant:
au moins un récepteur (406) étant apte à recevoir au moins un message d'appel à partir de l'un desdits dispositifs d'accès (322-338) sur au moins l'un d'une pluralité de points d'accès (204, 206, 208, 210, 212 ; 224, 226, 228, 230, 232) ;
au moins un émetteur (404) étant apte à envoyer ledit au moins un message d'appel à partir dudit au moins l'un d'une pluralité de points d'accès (204, 206, 208, 210, 212 ; 224, 226, 228, 230, 232) à son commutateur (202, 222 ; 306, 308) en utilisant un message de protocole de messagerie ;
ledit au moins un récepteur (406) étant de plus apte à recevoir ledit au moins un message d'appel par ledit commutateur correspondant ; et
au moins un dispositif de commande (412) étant apte à déterminer une charge sur chacun de ladite pluralité de points d'accès (204, 206, 208, 210, 212 ; 224, 226, 228, 230, 232) à la fois des premier et second domaines de réseau (214, 234) en réponse à au moins un message d'appel ;
ledit au moins un émetteur (404) étant apte à communiquer lesdites informations de charge desdits points d'accès (204, 206, 208, 210, 212 ; 224, 226, 228, 230, 232) desdits premier et second domaines entre lesdits commutateurs en utilisant ledit message de protocole de messagerie.

9. Système selon la revendication 8, dans lequel ledit au moins un dispositif de commande (412) est apte à interpréter ledit au moins un message d'appel sur au moins l'un de ladite pluralité de points d'accès (204, 206, 208, 210, 212 ; 224, 226, 228, 230, 232) qui est situé dans une plage de fonctionnement dudit dispositif d'accès (322-338).

10. Système selon la revendication 9, dans lequel ledit au moins un dispositif de commande (412) est apte à sélectionner un point d'accès (204, 206, 208, 210, 212 ; 224, 226, 228, 230, 232) à partir de ladite pluralité de points d'accès (204, 206, 208, 210, 212 ; 224, 226, 228, 230, 232) ayant la plus petite charge.
